# EUROPEAN PATENT APPLICATION

(11) **EP 4 523 709 A2**
(43) Date of publication of application: **19.03.2025**
(21) Application number: 24212915.3
(22) Date of filing: 02.05.2023
(51) Int. Cl.: A61K 49/00

(54) **CRYSTALLINE INDOCYANINE GREEN AND METHOD FOR THE PRODUCTION THEREOF**

(30) Priority: 06.05.2022 EP 22305679
(62) Divisional of application: 23723912.4
(71) Applicant: Provepharm Life Solutions, 13013 Marseille (FR)
(72) Inventor: HELIOT, Armelle, 13013 MARSEILLE (FR); MEMBRAT, Romain, 13013 MARSEILLE (FR); QUERU, Stephane, 13013 MARSEILLE (FR); SAYAH, Babak, 13013 MARSEILLE (FR)
(74) Representative: Bandpay & Greuter

(57) **Abstract**

The present invention relates to a novel method for the preparation of indocyanine green, the method comprising a step of converting 4-[2-[7-[1,1-dimethyl-3-(4-sulfobutyl)benzo[e]indol-3-ium-2-yl] hepta-2,4,6-trienylidene]-1,1-dimethylbenzo[e]indol-3-yl]butane-1-sulfonic acid to Indocyanine green by treatment with sodium chloride. The present invention also relates to a crystalline form of indocyanine green, pharmaceutical compositions comprising the same, and to methods of using the same as a medicament or a diagnostic agent.

## Description

The present invention relates to the field of medical and pharmaceutical arts. The invention relates to a crystalline form of indocyanine green, a method for preparing such crystalline form and methods of use thereof.

### STATE OF THE ART

Indocyanine green (ICG) is a water-soluble tricarbocyanine fluorescent dye having the following chemical structure: 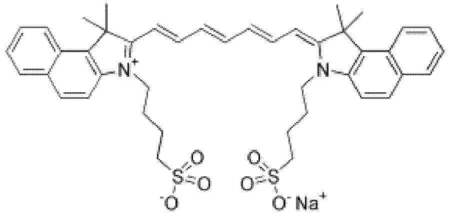 Chemical structure of indocyanine green, ICG

ICG is a clinically approved near-infrared (NIR) fluorescent dye. It is commonly used in a wide range of medical imaging and diagnostic procedures, for example, in determining cardiac output or hepatic function, in visualizing liver blood flow and blood flow during ophthalmic angiography or in visualizing cancerous tissues. These medical uses of ICG are based on its high optical absorbance in a spectral region where human tissues are relatively transparent (750-800 nm). These medical uses are made possible due to its very low toxicity.

For the above-mentioned applications, ICG has to be administered by intravenous route in the form of aqueous solutions. In accordance to the United States Food and Drug Administration, to prepare pharmaceutical compositions for intravenous administration, ICG should be used in a form as pure as possible, and having constant physical properties, including purity, solubility and stability.

Currently, ICG is commercially available as a lyophilized powder that can be dissolved in sterile water for injection and is often supplied as a kit. However, this indocyanine green, sensitive to air and light, has a poor stability in aqueous environments but also in the solid state. Poor stability in aqueous environments limits its usefulness in certain applications, including time-sensitive surgical procedures. For that reason, the instructions of vendors of ICG range from immediate use of the reconstituted ICG solution up to usage within six hours before patient dosage, with any unused portion being discarded. Lack of stability in solid form also represents a difficulty for ICG manufacture and storage in the long term.

Further, although currently available ICG compositions provide adequate levels of ICG for use in the above approved applications, the solubility of ICG in water for injection decreases as the concentration exceeds 5 mg/ml. The United States Pharmacopeia monograph for ICG mentions the possibility of adding up to 5% w/w of sodium iodide that would improve the solubility of the ICG in solution. However, iodine is a powerful allergen. The risk of anaphylactic shock initiated by the intravenous injection of a preparation of indocyanine green comprising up to 5% iodine cannot be overlooked.

Hence, the clinical benefit of ICG would be enhanced if the characteristics, especially the long-term storage stability, the solubility and the purity of ICG could be improved. Such improvements in ICG characteristics would provide a safer treatment/diagnosis method for patients in need thereof.

Several methods have been described in the prior art in an attempt to prepare ICG having improved properties.

For example, WO9507888 discloses a method for the preparation of high purity substituted benz[e]indoles especially ICG, consisting in preparing an arylhydrazine which is subjected to a Fischer indole synthesis with a ketone. The obtained benz[e]indole is reacted with a radical, then subjected to a purification step.

US5,750,722 describes the preparation of high purity Indocyanine green by reacting 1,1,2-trimethyl-1H-benzo[e]indole with 1,4-butanesultone followed by a treatment with N-((2E,4E)-5-(phenylamino) penta-2,4-dienylidene) aniline hydrochloride in presence of triethylamine and sodium acetate. The obtained indocyanine green is free of iodide ions and contains less than 0.5% of residual impurities. After lyophilization, the obtained product in the solid state presents limited stability.

WO2017/093889A1 describes a process for the preparation of high purity Indocyanine green comprising steps of reacting 1,1,2-trimethyl-1H-benzo[e]indole with 1,4-butane sulfone to give 4-(1,1,2-trimethyl-1H-benzo[e]indolium-3-yl)butane-1-sulfonate, followed by reacting 4-(1,1,2-trimethyl-1H-benzo[e]indolium-3-yl)butane-1-sulfonate with N-phenyl-N-((1E,3E,5E)-5-(phenylimino)penta-1,3-dienyl)acetamide in presence of sodium acetate and alcohol; and finally extracting the obtained compound with an ester solvent. The obtained ICG has a high purity of about 99.0% and is in the form of an amorphous powder. When the process disclosed in this document is reproduced, an essentially amorphous form of ICG is obtained, which is also characterized by limited stability.

US2019/0337896A1 describes a method for preparing indocyanine green by reacting 1,1,2-trimethyl-1H-benzo[e]indole with 1,4-butanesultone, followed by a treatment with N-((2E,4E)-5-(phenylamino) penta-2,4-dienylidene) aniline hydrochloride in presence of triethylamine and sodium iodide. The method also includes steps of purification of the intermediate and the final ICG product. The indocyanine green obtained by this method has a purity greater than 99.5% and comprises less than 0.5% of impurities. The analysis of the product by X-ray diffraction shows a mostly amorphous product. The presence of two ill-defined peaks at 3.30 and 4.86 degrees 2 theta on the PXRD pattern cannot be conclusively attributed to a crystalline form of ICG. Further, when the process disclosed in this document is reproduced, an essentially amorphous form of ICG is obtained and a rapid degradation of this solid form of ICG is observed as demonstrated in the experimental part of the present application.

CN104130178 and CN106631979 disclose methods for preparing ICG similar to that described in US2019/0337896A1. The ICG obtained has a purity of greater than 98.0%.

None of these documents discloses either crystalline forms of ICG or methods for producing them.

Indeed, compared to amorphous forms, crystalline forms generally have lower impurity concentration, and more consistent and uniform product quality, for example, more consistent physical characteristics such as color as well as longer-term stability. Crystalline forms of an API ensure a reproducibility of quality control results between batches, in terms of physical properties, thus making the API more reliable. A crystalline product is also easier to handle and to produce on an industrial scale. Thus, it is an important advantage to provide the ICG compound in a substantially crystalline form.

The present invention provides an indocyanine green compound in a crystalline form and a method for producing the same.

The applicant has developed a new method for the preparation of ICG that gives direct access to a crystalline form of indocyanine green which was not known in the art.

The method of the invention offers greater ease of processing in that it leads, in a reproducible manner, to a crystalline ICG of unique polymorphism. The crystalline form of ICG offers many advantages in terms of efficiency and economy for an application on an industrial scale.

More particularly, the discovery of this crystalline form of ICG provides a new opportunity to improve the characteristics of ICG in the solid state but also in formulations for intravenous administration. In particular, the applicant has found that the crystalline indocyanine green as described in details here-after exhibits notably improved properties, especially in terms of purity and long-term stability, compared to prior art, essentially amorphous, forms of indocyanine green.

### SUMMARY OF THE INVENTION

According to a first aspect, the invention relates to an Indocyanine green in a crystalline form characterized by a powder X-ray diffraction pattern presenting at least peaks at 20.66, 14.38, 12.81, 4.22 and 3.83 degrees 2 theta ± 0.2 degrees 2 theta.

Advantageously, the X-ray diffraction pattern presents additional peaks at 23.26, 20.24, 17.72 and 5.30 degrees 2 theta ± 0.2 degrees 2 theta.

Advantageously, the X-ray diffraction pattern presents further additional peaks at 19.24, 18.22, 18.08, 7.69, 6.37, and 5.01 degrees 2 theta ± 0.2 degrees 2 theta.

Advantageously, the indocyanine green according to the invention has a purity of at least 98.0%, preferably at least 99.0%, more preferably at least 99.5%, still more preferably at least 99.7%, most preferably at least 99.8 %, the purity being measured as % area by HPLC at 240 nm.

Preferably, each impurity represents less than 0.50%, preferably less than 0.40%, more preferably less than 0.20%, most preferably less than 0.15% measured as % area by HPLC at 240 nm.

Advantageously, the ICG in a crystalline form according to the invention has the appearance of reddish crystals.

The invention also relates to a pharmaceutical composition comprising the indocyanine green described above and in details here-under and a pharmaceutically acceptable carrier.

Preferably, the pharmaceutically acceptable carrier comprises at least one diluent chosen from the group consisting of water for injection, particularly sterile water for injection (SWFI) and/or bacteriostatic water for injection (BWFI), ethyl alcohol, methyl alcohol, isopropyl alcohol, n-propyl alcohol, butyl alcohol, glycerin, propylene glycol, and polyethylene glycol and mixtures thereof, preferably water for injection.

Preferably, the pharmaceutical composition further comprises at least a compound chosen from the group consisting of histidine, ethylenediaminetetraacetic acid (EDTA) and salts thereof, cysteine, sodium chloride, dithiothreitol, ascorbic acid, sodium ascorbate, disodium hydrogen phosphate, sodium dihydrogen phosphate and mixtures thereof.

According to a variant, the pharmaceutical composition comprises indocyanine green according to the invention and at least a compound selected from ascorbic acid, a salt thereof or their mixtures.

According to another variant, the pharmaceutical composition comprises indocyanine green according to the invention and histidine.

According to another variant, the pharmaceutical composition comprises indocyanine green according to the invention, histidine, ethylenediaminetetraacetic acid (EDTA) and/or salts thereof and sodium chloride.

The invention also relates to the indocyanine green as described above and in details here-under, or the pharmaceutical composition comprising it, for their use as a medicament or a diagnostic agent.

Preferably, the indocyanine green or the pharmaceutical composition comprising it is used for obtaining an angiographic image of tissue in a patient, for determining cardiac output, for determining hepatic function and liver blood flow, for the detection of sentinel lymph node, for the evaluation and/or prediction of skin-flaps viability, for the diagnosis and treatment of age-related macular degeneration, and/or for the diagnosis and treatment of choroidal neovascularization and tumors.

According to a second aspect, the invention relates to a method for preparing indocyanine green, preferably for preparing crystalline indocyanine green according to the invention, characterized in that it comprises at least a step d) of converting 4-[2-[7-[1,1-dimethyl-3-(4-sulfobutyl)benzo[e]indol-3-ium-2-yl] hepta-2,4,6-trienylidene]-1,1-dimethylbenzo[e]indol-3-yl]butane-1-sulfonic acid of formula (VI) to 3,3,3',3'-tetramethyl-1,1'-di(4-sulfobutyl)-4,5,4',5'-dibenzoindotricarbocyanine sodium salt of formula (VII) by treatment with sodium chloride:

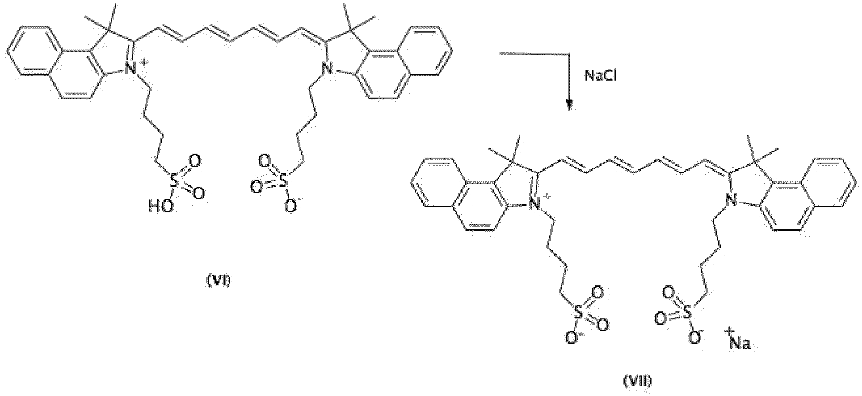

Advantageously, the method for preparing indocyanine green further comprises a step e) of purification of indocyanine green after step d), wherein the purification step e) comprises at least:
e₁) suspending or dispersing or dissolving indocyanine green of formula (VII) in a solvent,
e₂) heating the composition obtained at e₁),
e₃) cooling down the solution obtained at e₂),
e₄) recovering indocyanine green in a crystalline form.

Advantageously, the solvent is step e₁) is chosen from the group consisting of water, acetone, methanol, ethanol, isopropyl alcohol, n-propanol, n-butanol and mixtures thereof.

Advantageously, the composition in step e₂) is heated at a temperature ranging from 40 to 80°C, preferably from 40 to 65°C.

Advantageously, in step e₃), the solution is cooled down to a temperature ranging from 10 to 25°C.

Advantageously, the cooling in step e₃) is carried out without stirring or agitating.

The invention also relates to the indocyanine green obtained, obtainable or directly obtained by the method described above, in particular wherein in step d) the sodium salt of formula (VII) is treated with sodium chloride.

### DETAILED DESCRIPTION

The term "consists essentially of" followed by one or more characteristics, means that may be included in the process or the material of the invention, besides explicitly listed components or steps, components or steps that do not materially affect the properties and characteristics of the invention.

The expression "comprised between X and Y" includes boundaries, unless explicitly stated otherwise. This expression means that the target range includes the X and Y values, and all values from X to Y.

Throughout the application, when "Indocyanine green" or ICG is referred to, it means a compound having the formula (VII) described here-after.

The references to methods of treatment in the description can be interpreted as references to the compounds, pharmaceutical compositions and medicaments of the present invention for use in a method for the treatment of the human and/or animal body by therapy or for diagnosis.

### Crystalline form of indocyanine green

According to a first aspect, the invention provides a crystalline form of indocyanine green.

The crystalline form of ICG according to the invention is characterized by a powder X-ray diffraction pattern presenting at least major peaks at 20.66, 14.38, 12.81, 4.22 and 3.83 degrees 2 theta ± 0.2 degrees 2 theta.

In a preferred embodiment, the crystalline form of ICG according to the invention is characterized by a powder X-ray diffraction pattern presenting at least major peaks at 20.66, 14.38, 12.81, 4.22 and 3.83 and additional peaks at 23.26, 20.24, 17.72 and 5.30 degrees 2 theta ± 0.2 degrees 2 theta.

In a more preferred embodiment, the crystalline form of ICG according to the invention is characterized by a powder X-ray diffraction pattern presenting at least major peaks at 20.66, 14.38, 12.81, 4.22 and 3.83 and additional peaks at 23.26, 20.24, 19.24, 18.22, 18.08, 17.72, 7.69, 6.37, 5.30, and 5.01 degrees 2 theta ± 0.2 degrees 2 theta.

In a most preferred embodiment, the crystalline form of ICG according to the invention is characterized by the following angular positions in an X-Ray powder diffraction pattern expressed in terms of scattering angle 2 theta, inter-reticular distances d, intensity and relative intensity (expressed as a percentage of the most intense peak):

| Scattering angle 2 theta (°) | d-spacing (Å) | Intensity (counts) | Relative intensity (%) |
|---|---|---|---|
| 3.83 | 23.08 | 7545 | 79.4 |
| 4.22 | 20.93 | 7361 | 77.5 |
| 5.01 | 17.64 | 2118 | 24.7 |
| 5.30 | 16.67 | 3623 | 42.3 |
| 6.37 | 13.86 | 2249 | 26.2 |
| 7.69 | 11.49 | 1722 | 20.1 |
| 12.81 | 6.91 | 6588 | 69.4 |
| 13.33 | 6.64 | 912 | 9.6 |
| 13.80 | 6.41 | 1355 | 14.3 |
| 14.38 | 6.15 | 8168 | 86.0 |
| 14.70 | 6.02 | 1245 | 13.1 |
| 16.14 | 5.49 | 923 | 9.7 |
| 17.72 | 5.00 | 3816 | 40.2 |
| 18.08 | 4.90 | 2257 | 23.8 |
| 18.22 | 4.87 | 2374 | 25.0 |
| 19.24 | 4.61 | 2690 | 28.3 |
| 20.24 | 4.38 | 4302 | 45.3 |
| 20.66 | 4.30 | 9499 | 100.0 |
| 23.26 | 3.82 | 3835 | 40.4 |

It is to be noted that the intensity and relative intensity values of the above peaks may vary by +/-15%.

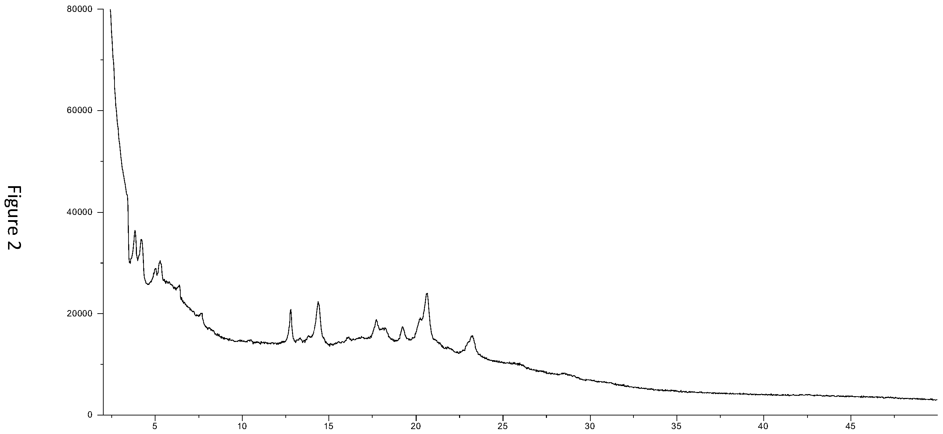

Advantageously, the ICG according to the invention has a crystalline form characterized by the powder X-ray diffraction pattern as shown in Figure 2.

Preferably, the ICG according to the invention has the appearance of reddish crystals, whereas prior art amorphous ICG has the appearance of a green powder. More precisely, the color of the crystals of the ICG according to the invention can be defined as a golden red glittery color. This characteristic can be evaluated visually or by methods known to the skilled person such as spectrophotometry.

### Method for preparing crystalline indocyanine green

According to a second aspect, the present invention relates to a method for preparing crystalline indocyanine green, said method comprising at least a step of salification of Indocyanine green in acid form with sodium chloride to give a sodium salt of indocyanine green, commonly designated indocyanine green or ICG.

For the purpose of the invention, the expression "Indocyanine green in acid form" corresponds to the compound of formula (VI) below defined as 4-[2-[7-[1,1-dimethyl-3-(4-sulfobutyl)benzo[e]indol-3-ium-2-yl] hepta-2,4,6-trienylidene]-1,1-dimethylbenzo[e]indol-3-yl]butane-1-sulfonic acid.

According to a preferred embodiment, the method according to the invention further comprises at least a step e) of purification of indocyanine green obtained in step d).

### Salification step d)

In particular, the method according to the invention comprises at least a step d) of converting 4-[2-[7-[1,1-dimethyl-3-(4-sulfobutyl)benzo[e]indol-3-ium-2-yl] hepta-2,4,6-trienylidene]-1,1-dimethylbenzo[e]indol-3-yl]butane-1-sulfonic acid of formula (VI) to 3,3,3',3'-tetramethyl-1,1'-di(4-sulfobutyl)-4,5,4',5'-dibenzoindotricarbocyanine sodium salt of formula (VII) by treatment with, or use of, sodium chloride according to the following scheme:

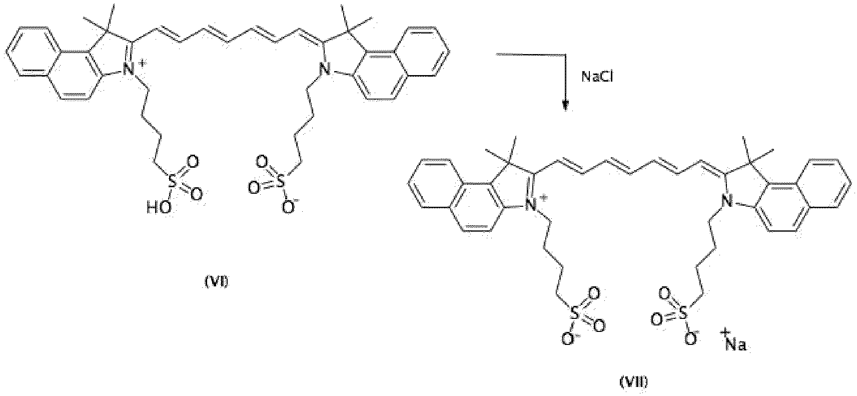

Advantageously, in step d), sodium chloride is used in an amount such that the molar ratio Indocyanine green in acid form of formula (VI) to sodium chloride is inferior or equal to 1:1, preferably at a molar ratio ranging from 1:5 to 1:1, more preferably from 1:3 to 1:1.

Advantageously, the reaction of step d) is carried out in a solvent chosen from the group consisting of water, methanol, ethanol, isopropylalcohol, n-propanol, n-butanol and mixtures thereof.

According to a favorite embodiment, step d) is carried out in a mixture of water and methanol. Preferably, water and methanol are mixed in a volume ratio ranging from 5:1 to 1:5, preferably from 2:1 to 1:5, more preferably from 2:1 to 1:2.

Advantageously, step d) is carried out at a temperature raging from 25 to 65 °C, preferably from 40 to 55 °C.

Advantageously, after completion of the reaction of step d), the reaction mixture is cooled down to room temperature and the product of formula (VII) is isolated from the reaction medium by precipitation. Preferably, this precipitation is carried out by the addition of a solvent chosen from the group consisting of ethers, water, acetone and mixtures thereof.

According to a favorite embodiment, the indocyanine green of formula (VII) is isolated from the reaction medium by precipitation with acetone.

Alternatively, it could be envisaged to isolate the product of formula (VII) from the reaction medium by other purification techniques such as solvent extraction or column chromatography.

### Preparation of Indocyanine green in acid form steps a), b) and c)

The Indocyanine green in acid form of formula (VI) may be obtained by any process known to the skilled person, such as for example the process described in WO2017/093889A1 or in US5,750,722.

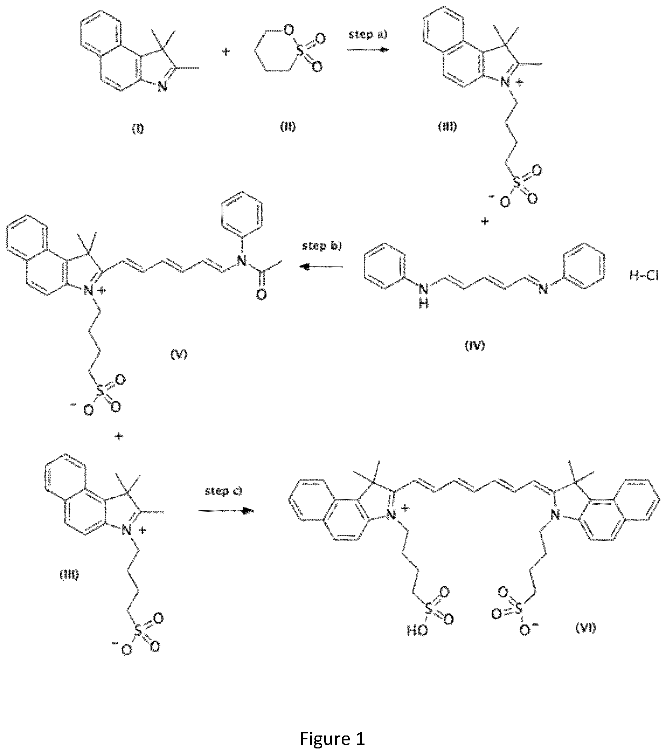

According to a favorite embodiment of the present invention, Indocyanine green in acid form of formula (VI) is prepared according to the reaction scheme represented in Figure 1 comprising steps a), b) and c).

Step a) consists of reacting 1,2,2-trimethylbenzo[e]indole of formula (I) with 1,4-butanesultone of formula (II) in an equimolar ratio to obtain 4-(1,1,2-trimethyl-1H-benzo[e]indolium-3-yl)butane-1-sulfonate of formula (III) according to the following scheme:

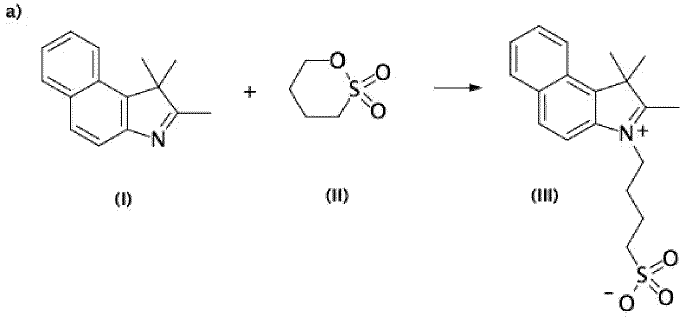

This reaction is known to the skilled person and is described, for example, in US5,750,722, WO2017/093889A1 and Chem. Eur. J. 2021, 27, 14535-14542.

The reaction of step a) may be carried out in a solvent chosen from the group consisting of pentane, hexane, heptane, cyclohexane, cyclopentane, petroleum ether, xylene, toluene, and mixtures thereof. According to a favorite embodiment, step a) is carried out in toluene.

Advantageously, the reaction of step a) is carried out at a temperature ranging from 100 °C to 180 °C, preferably from 120°C to 160°C, more preferably from 120°C to 150°C.

Advantageously, after completion of the reaction, the reaction mixture is cooled down to room temperature and the product of formula (III) is isolated from the reaction medium by precipitation. Preferably, this precipitation is carried out by the addition of a solvent chosen from the group consisting of ethers, water, acetone and mixtures thereof.

Step b) consists of condensing the intermediate of formula (III) obtained in step a) with glutaconaldehyde dianil hydrochloride of formula (IV) in an equimolar ratio in the presence of acetic anhydride to obtain 4-(1,1-dimethyl-2-((1E, 3E, 5E)-6-(N-phenyl acetamido)-hexa-1,3,5-trienyl)-1H-benzo[e]indolium-3-yl)-butane-sulfonate of formula (V) according to the following scheme:

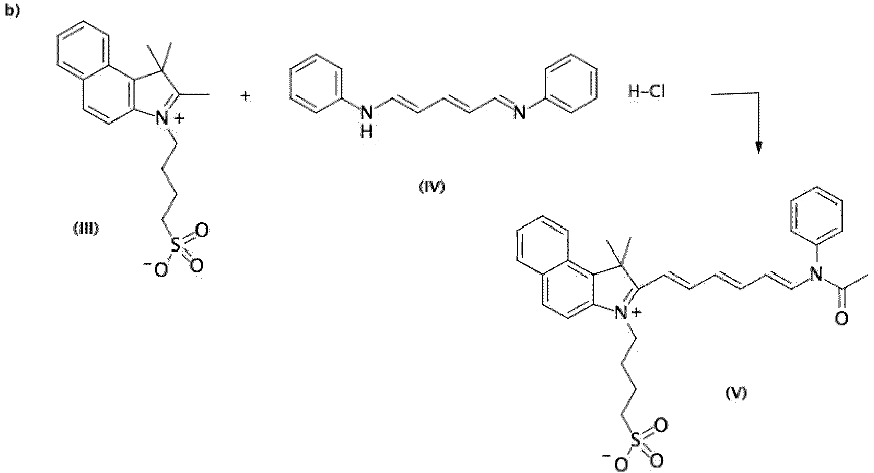

This reaction is described, for example, in EP2764861, US5,750,722 and US2019/0337896.

Alternatively, the reaction of step b) can be carried out in the presence of maleic anhydride instead of acetic anhydride.

Preferably, the reaction of step b) is carried out at a temperature ranging from 50°C to 170°C, preferably from 60°c to 150 °C, more preferably from 70°C to 130 °C.

Advantageously, after completion of the reaction, the reaction mixture is cooled down to room temperature and the product of formula (V) is isolated from the reaction medium by precipitation. Preferably, this precipitation is carried out by the addition of a solvent chosen from the group consisting of ethers, water, acetone and mixtures thereof.

Step c) consists of reacting the intermediate of formula (V) obtained in step b) with 4-(1,1,2-trimethyl-1H-benzo[e]indolium-3-yl)butane-1-sulfonate of formula (III) in an equimolar ratio in the presence of a base to obtain 4-[2-[7-[1,1-dimethyl-3-(4-sulfobutyl)benzo[e]indol-3-ium-2-yl]hepta-2,4,6-trienylidene]-1,1-dimethylbenzo[e]indol-3-yl]butane-1-sulfonic acid of formula (VI) according to the following scheme:

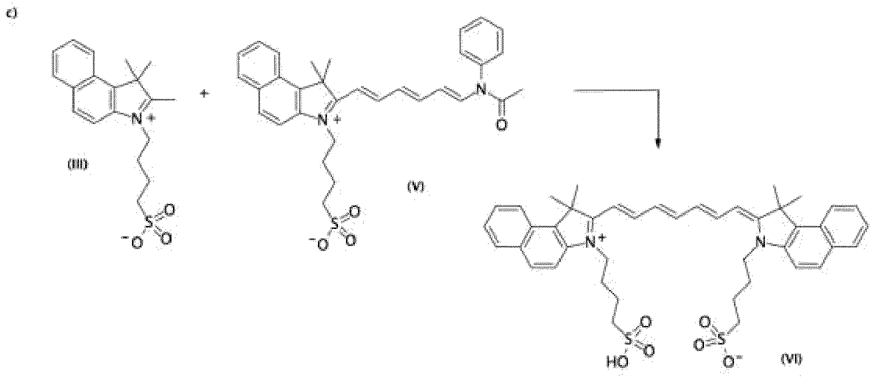

This reaction is described, for example, in EP2764861, US5,750,722 and US2019/0337896.

The reaction of step c) may be carried out in a solvent chosen from the group consisting of water, methanol, ethanol, isopropyl alcohol, propanol, butanol and mixtures thereof. According to a favorite embodiment, the reaction of step c) is carried out in a mixture of water and methanol. Preferably, water and methanol are mixed in a volume ratio ranging from 1: 1 to 1:3.

Preferably, the base in step c) is chosen from a group consisting of triethylamine, pyridine, ammonia, sodium carbonate, sodium bicarbonate and sodium hydroxide. More preferably, the base is triethylamine.

Preferably, the reaction of step c) is carried out at a temperature ranging from 20 °C to 40 °C, preferably at 25°C.

Advantageously, the intermediates of formulae (III), (V) and (VI) can be purified after steps a), b) and c) respectively. The purification of these intermediates can be carried out by one or more conventional purification steps such as precipitation, crystallization, solvent extraction. For example, the purification of these intermediates can be carried out according to the procedure disclosed in the examples of application US2019/0337896.

### Purification step e)

According to a favorite embodiment, the method for preparing indocyanine green according to the invention further comprises a step e) of purification of indocyanine green after step d).

According to a favorite embodiment, the purification step e) is carried out by recrystallization of indocyanine green of formula (VII).

Preferably, the purification step e) comprises at least the steps of:
e₁) suspending, or dispersing, or dissolving, the indocyanine green of formula (VII) in a solvent,
e₂) heating the composition obtained at step e₁),
e₃) cooling down the solution obtained in step e₂),
e₄) recovering indocyanine green in crystalline form.

Advantageously, the solvent in step e₁) is chosen from the group consisting of water, acetone, methanol, ethanol, isopropyl alcohol, n-propanol, n-butanol and mixtures thereof.

Preferably, the solvent is step e1) is a mixture of water and acetone.

More preferably, in step e1), water and acetone are used in a ratio ranging from 10:1 to 1:10 v/v, preferably from 4:1 to 1:6 v/v, more preferably from 1:1 to 1:5 v/v.

Advantageously, where the composition obtained in step e₁) is a suspension or a dispersion, this composition is heated in step e₂) to a temperature allowing the solubilization of indocyanine green.

Advantageously, in step e₂) the reaction medium is heated to a temperature superior or equal to 40 °C, preferably to a temperature ranging from 40 to 80 °C, preferably from 40°C to 65°C.

Advantageously, in step e₃) the solution is cooled down or allowed to cool down to a temperature comprised between 10°C and 25°C, preferably between 15°C and 25°C.

By "cooled down", is meant that the reaction medium is left to cool down to ambient temperature, or alternately, that active cooling down is implemented, for example by immerging the reactor in a cooler environment than ambient temperature, in order to accelerate the drop in temperature.

According to a favorite embodiment, the solution is then maintained at this temperature for a sufficiently long time to form ICG crystals. Preferably, the solution is maintained at a temperature between 10 and 25°C, preferably between 15°C and 25°C for a period of time ranging from 10 to 120 hours, preferably from 24 to 96 hours, more preferably from 48 to 80 hours.

Optionally, the solution is then further cooled down to a temperature inferior or equal to 10°C, preferably at a temperature ranging from -5 and 10°C, more preferably from 0 and 10 °C.

According to a preferred embodiment, step e₃) is carried out without stirring or agitating the solution.

By "step e₃) is carried out without stirring or agitating the solution", it is meant that all sub-steps, i.e., cooling to a temperature comprised between 10 and 25°C, maintaining the solution at this temperature for a certain period of time, and optionally cooling to a temperature below 10°C, are carried out without stirring or agitating the reaction medium.

Advantageously, in step e₄), crystalline indocyanine green is isolated from the reaction medium by filtration.

Advantageously, after step e₄), crystalline indocyanine green is further purified by at least one step e₅) of washing crystalline indocyanine green with a solvent.

Advantageously, washing is carried out with a solvent chosen from an acidic aqueous solution, acetone, acetonitrile and mixtures thereof.

Preferably, washing is carried out at least once with acetone and at least once with acetonitrile.

More preferably, washing is carried out once to three times with acetone and once to three times with acetonitrile.

### Properties of the obtained indocyanine green

According to a third aspect, the invention relates to an ICG compound, obtained, or obtainable, by a method comprising at least a step of converting 4-[2-[7-[1,1-dimethyl-3-(4-sulfobutyl)benzo[e]indol-3-ium-2-yl] hepta-2,4,6-trienylidene]-1,1-dimethylbenzo[e]indol-3-yl]butane-1-sulfonic acid of formula (VI) to 3,3,3',3'-tetramethyl-1,1'-di(4-sulfobutyl)-4,5,4',5'-dibenzoindotricarbocyanine sodium salt of formula (VII) by treatment with sodium chloride.

The applicant has surprisingly found that ICG obtained, or obtainable, by this method is crystalline. In particular, ICG obtained, or obtainable, by this method has the specific crystalline form as described above.

In addition, the applicant has surprisingly discovered that ICG obtained, or obtainable, by this method exhibits higher purity and/or physical stability and/or solubility than the ICG in amorphous form obtained by prior art methods. In addition, this method gives highly reproducible results, and thus gives access to an ICG of constant quality.

These improved properties and the new crystalline form of ICG are the direct result of the particular method of preparing ICG according to the invention.

### The purity of ICG

In particular, the method according to the invention allows the preparation of an ICG compound having a higher degree of purity than that of ICG obtained by the conventional methods described in the prior art which use sodium iodide or organic sodium salts as salification agents.

In particular, Indocyanine green of formula (VII) obtained by the method according to the present invention is substantially pure and has purity greater than 99.0%, preferably greater than 99.5%, more preferably greater than 99.7%, most preferably greater than 99.8% as measured by HPLC.

The term "purity" used herein means the extent to which the indocyanine green is free from undesirable or adulterating chemical entities.

According to the invention, purity and impurities in the obtained indocyanine green are evaluated in % area by HPLC at 240 nm.

Preferably, the indocyanine green obtained by the implementation of the process according to the invention comprises less than 1.0%, preferably less than 0.5% of impurities as measured by HPLC.

Preferably, the indocyanine green obtained by the implementation of the method according to the invention comprises less than 0.50%, preferably less than 0.40%, more preferably less than 0.20%, most preferably less than 0.15% of each impurity as measured by HPLC.

The impurities contained in the indocyanine green can be any reaction by-product or intermediate resulting from the process as described in details above. For example, the impurities can include N-phenylacetamide, 4-(1,1,2-trimethyl-1H-benzo[e]indolium-3-yl) butane-1-sulfonate, 4-(1,1,2-dimethyl-2-((1E, 3E, 5E)-6-(N-phenylacetamido) hexa-1,3,5-trienyl)-1H-benzo[e]indolium-3-yl) butane-1-sulfonate, but are not limited thereto.

The indocyanine green obtained by the implementation of the method according to the invention is substantially free, preferably totally free of iodine and/or iodide, especially sodium iodide. The absence of iodine/iodide in the indocyanine green can be checked, for example, by ion-exchange chromatography.

Preferably, the obtained indocyanine green comprises a content of metallic contaminants of less than 200 ppm, preferably, less than 100 ppm, more preferably less than 50 ppm, even more preferably less than 20 ppm, by weight of metals based on weight of indocyanine green. The metallic contaminant content in the indocyanine green can be measured by Inductively Coupled Plasma Mass Spectrometry (ICP-MS).

By "metallic contaminants" it is to be understood the so-called "heavy" metals and in particular: Al, As, Cd, Cr, Cu, Fe, Sn, Mn, Hg, Mo, Ni, Pb, Zn as well as their organic and inorganic derivatives.

Still more preferably, the indocyanine green comprises no or less than 2 ppm of lead and arsenic.

### The stability of ICG

The applicant has found that the crystalline indocyanine green obtained by the method according to the invention exhibits a notably improved stability compared to prior art indocyanine green.

The terms "stable" and "stability" means that the indocyanine green content in solid state and/or in a liquid composition, in particular in an aqueous composition, remains stable upon storage during a certain amount of time.

By "aqueous composition" it is to be understood an aqueous solution, an aqueous suspension, a colloidal aqueous suspension, an aqueous dispersion, preferably an aqueous solution.

The stability of the ICG according to the invention is evaluated by measuring the variation of indocyanine green content before storage and the indocyanine green content after storage during extended periods of time, the indocyanine green being stored in solid state or after dissolution in an aqueous composition.

It is to be understood that when stored in solid state, the indocyanine green is stored in its crystalline form described above (not in a lyophilized form). The crystalline indocyanine green according to the invention is advantageous in that it shows substantially no signs of aggregation, degradation and substantially no, or minimal, formation of impurities as a result of chemical modification of the indocyanine green after storage during extended periods of time. In addition, the crystalline ICG according to the invention is advantageous in that it shows no significant discoloration or decrease in fluorescence intensity or in peak absorbance after storage during extended periods of time.

Advantageously, the indocyanine green according to the invention exhibits a stability in solid state far superior, compared to the prior art indocyanine green compounds, especially prior art lyophilized ICG.

Advantageously, the crystalline indocyanine green according to the invention remains stable when stored at ambient temperature in solid state for up to one month, preferably for up to 2 months, preferably for up to 3 months, more preferably for up to 6 months, still more preferably for up to 12 months and most preferably for up to 2 years.

Advantageously, the crystalline indocyanine green according to the invention remains stable when stored at ambient temperature after being dissolved in an aqueous medium for up to 24 hours, preferably for up to 48 hours, more preferably up to 3 days and most preferably for up to 6 days. The term "ambient temperature" means a controlled room temperature as between 20 to 25 °C, with excursions between 15 to 30 °C, as defined by the United States Pharmacopeia, or between 15 to 25 °C as defined by the European Pharmacopoeia.

Advantageously, this stability of indocyanine green is observed when the indocyanine green is stored in a container protecting it from natural light and/or UV light and/or fluorescent light. Preferably, the container is tightly or hermetically closed.

The stability of the indocyanine green according to the invention can be evaluated by visual inspection of color and/or transparency and/or other analytical methods. The analytical methods for evaluating the stability of the indocyanine green are known by the person skilled in the art. They can include nuclear magnetic resonance (NMR), high-performance liquid chromatography (HPLC), size exclusion chromatography (SEC), liquid chromatography coupled with mass spectrometric analysis (LC-MS), dynamic light scattering (DLS), differential scanning calorimetry (DSC), UV spectroscopy, and Fourier-transform infrared spectroscopy (FTIR) or a combination of these methods.

Advantageously, the stability of indocyanine green is evaluated by measuring the variation of indocyanine green content by HPLC before and after storage during extended periods of time. More advantageously, the indocyanine green content and the variation of this content is evaluated in % area by HPLC at 240 nm.

Preferably, the stability of indocyanine green corresponds to a drop in content of indocyanine green measured in % area by HPLC at 240 nm of less than or equal to 10 %, preferably less than or equal to 5%, more preferably less than or equal to 2%, when the indocyanine green is stored in the solid state at ambient temperature for up to 1 month, preferably up to 3 months, more preferably up to 6 months, still more preferably up to 12 months and most preferably for up to 2 years.

Preferably, the stability of indocyanine green corresponds to a drop in content of indocyanine green measured in % area by HPLC at 240 nm of less than or equal to 10 %, preferably less than or equal to 5%, more preferably less than or equal to 2%, when the indocyanine green is stored at ambient temperature in an aqueous medium for up to 24 hours, preferably for up to 48 hours, more preferably for up to 3 days and most preferably for up to 6 days.

The stability of the indocyanine green according to the invention in an aqueous medium can be greatly improved by the addition of one or more stabilizing compound chosen from the group consisting of histidine, ethylenediaminetetraacetic acid (EDTA) and salts thereof, cysteine, sodium chloride, dithiothreitol, ascorbic acid, sodium ascorbate, disodium hydrogen phosphate, sodium dihydrogen phosphate and mixtures thereof.

In the presence of these additives, the aqueous ICG formulation is more stable and the drop in content of indocyanine green measured in % area by HPLC at 240 nm of less than or equal to 10 %, preferably less than or equal to 5%, more preferably less than or equal to 2%, when stored at ambient temperature for up to 1 month, preferably up to 3 months, more preferably up to 6 months, still more preferably up to 12 months and most preferably for up to 2 years. By "drop in content" it is to be understood, within the meaning of the present application, the percentage difference between the measured content of indocyanine green prior to storage and the measured content of indocyanine green after a determined storage time, the content being measured in % area by HPLC at 240 nm.

The stability of indocyanine green may also correspond to the fact that the total amount of impurities contained in the indocyanine green does not increase during storage, in particular does not increase to a level that reduces the capability of the indocyanine green to be used for medical and/or diagnostic applications. For example, when the indocyanine green is stored at ambient temperature in the solid state for at least 1 month and such impurities are then measured by HPLC, only a small amount of the impurities in the composition is observed and this amount does not increase considerably over time.

The term "impurity" is to be understood, within the context of the present invention, as a chemical entity that is not indocyanine green, or excipients or other additives to the indocyanine green according to the invention. The impurities may be process-related impurities such as byproducts or intermediates that can be formed during the manufacture of the indocyanine green, or degradation related impurities that result from chemical transformation of indocyanine green during storage.

In an embodiment, the increase of impurities in the indocyanine green according to the invention as area % variation measured by HPLC at 240 nm is less than or equal to 10%, preferably less than or equal to 5%, more preferably less than or equal to 2% when the indocyanine green is stored in the solid state for up to 1 month, preferably up to 2 months, more preferably up to 6 months, most preferably for up to 2 years at ambient temperature.

### Compositions comprising the crystalline indocyanine green

According to a fourth aspect, the present invention relates to a pharmaceutical composition comprising the crystalline indocyanine green which has been above disclosed, and/or indocyanine green obtained, or obtainable, by the method described above.

The pharmaceutical composition according to the invention may be provided in any suitable form such as a liquid solution or as a solid powder to be reconstituted in liquid solutions for intravenous administration.

The pharmaceutical composition may further comprise at least one pharmaceutically acceptable carrier and/or at least one pharmaceutically acceptable additive.

As used herein, the term "pharmaceutically acceptable" refers to compounds, materials and compositions which are suitable for use in contact with the tissues of human beings and animals without excessive toxicity, irritation, or other problem or complication, commensurate with a reasonable benefit/risk ratio.

The term "carrier" as used herein means a pharmaceutically acceptable material, composition or vehicle, such as a liquid or solid filler, diluent, excipient, solvent or encapsulating material.

Advantageously, the pharmaceutically acceptable carrier comprises at least one diluent.

The term "diluent" includes pharmaceutically acceptable solvents, that are safe and nontoxic upon administration to humans or animals, and are useful for the preparation of a pharmaceutical formulation.

An appropriate diluent can be any liquid which is biologically acceptable and in which the composition of the invention is completely soluble. Water, particularly sterile water for injection (SWFI) and/or bacteriostatic water for injection (BWFI), is a preferred diluent, since it does not include salts or other compounds which may affect the stability of the indocyanine green. However, other diluents may be used such as sterile saline solution, Ringer's solution, dextrose solution, glucose solution, ethyl alcohol, methyl alcohol, isopropyl alcohol, n-propyl alcohol, butyl alcohol, glycerin, propylene glycol, and polyethylene glycol and mixtures thereof. The person skilled in the art is able to choose the diluent according to the desired use and with respect to the other compounds of the composition.

According to a preferred embodiment, the diluent is chosen from the group consisting of water for injection, bacteriostatic water for injection, sterile saline solution, Ringer's solution, dextrose solution, and glucose solution.

In a preferred embodiment, the diluent is water for injection, particularly sterile water for injection (SWFI) and/or bacteriostatic water for injection (BWFI).

The term "additives" include components contained in the pharmaceutical composition other than the indocyanine green. Examples of such additives include buffer agents, pH adjusting agents, isotonizing agents, surfactants, antiseptic agents, tonicifying agents, antimicrobial agents, wetting agents, and emulsifiers. These additives are generally available to one of ordinary skill in the art and may be in any form such as solid, liquid, or semi-solid.

According to an embodiment, the pharmaceutical composition comprising the indocyanine green does not comprise sodium iodide.

According to a favorite embodiment, the pharmaceutical composition comprising indocyanine green according to the invention further comprises at least one stabilizing compound chosen from the group consisting of histidine, ethylenediaminetetraacetic acid (EDTA) and salts thereof, cysteine, sodium chloride, dithiothreitol, ascorbic acid, sodium ascorbate, disodium hydrogen phosphate, sodium dihydrogen phosphate and mixtures thereof.

These stabilizing compounds were described for example in applications PCT/EP2022/056443, PCT/EP2022/056445 and PCT/EP2022/056446. The addition of such compounds could further improve the long-term stability of aqueous pharmaceutical compositions comprising the indocyanine green according to the present invention.

Preferably, according to a variant, the pharmaceutical composition comprises, preferably consists in, the indocyanine green according to the present invention and at least a compound chosen from ascorbic acid, a salt thereof or their mixtures.

Preferably, according to a second variant, the pharmaceutical composition comprises, preferably consists in, the indocyanine green according to the present invention and histidine.

Preferably, according to a third variant, the pharmaceutical composition comprises, preferably consists in, the indocyanine green according to the present invention, histidine, ethylenediaminetetraacetic acid (EDTA) and/or salts thereof and sodium chloride.

Preferably, the amount of additives in the composition of the invention is within a range that does not substantially adversely affect the activity of the indocyanine green. Preferably, the composition of the invention contains the minimum number and amount of additives necessary to provide a stable and efficacious composition. The skilled person is able to adjust the amounts of the additives according to their solubility in the carrier. The pharmaceutical composition according to the invention may be prepared using any known method.

The concentration of indocyanine green in the composition can be any concentration that is appropriate for use in medical treatment or diagnostics, in particular to produce angiographic images of satisfactory quality.

According to a favorite embodiment, the pharmaceutical composition according to the invention is in the form of a kit comprising in a first part the indocyanine green according to the invention, and, optionally at least one additive, and in a second part a carrier as described above.

According to another favorite embodiment, the pharmaceutical composition according to the invention is in the form of a kit comprising in a first part indocyanine green according to the invention, and in a second part the carrier and, optionally at least one additive as described above.

All the preferred embodiments described above for the indocyanine green and the pharmaceutical composition apply also to any of these kit variants.

### Uses of the indocyanine green according to the invention

The crystalline Indocyanine green according to the invention, notably the pharmaceutical compositions comprising the same, may be used in a method of diagnosis and/or therapy (as a treatment agent) in a patient. The method comprises the administration of an aqueous composition of indocyanine green in an effective amount. This administration may be carried out by enteral route, parenteral route, in particular intravenous injection or by local application. Preferably, administration is carried out by intravenous injection.

The term "effective amount" means that amount of indocyanine green that will elicit the biological or medical response of a tissue, system, animal or human that is being sought, for instance, by a researcher or clinician.

For example, the crystalline Indocyanine green according to the invention, in particular the pharmaceutical compositions comprising the same, can be used in hyperthermal therapy, selective photocoagulation reinforced by indocyanine green, photodynamic therapy (PDT), photodynamic and hyperthermal therapy (PHT). More particularly, as PDT applications, the Indocyanine green according to the invention can be used for infection treatment, acne treatment, macular surgery, cancer treatment, etc. The use of the Indocyanine green according to the invention may be associated with other therapies such as immunotherapy, radiotherapy, ultrasound and chemotherapy.

The crystalline Indocyanine green according to the invention can also be used for obtaining an angiographic image of tissue in a patient, for determining cardiac output, for determining hepatic function and liver blood flow, for the detection of sentinel lymph node, for the evaluation and/or prediction of skin-flaps viability, for the diagnosis and treatment of age-related macular degeneration, of related choroidal neovascularization and tumors. Preferably, the crystalline Indocyanine green according to the invention is used for obtaining an angiographic image of tissues, for determining cardiac output, for determining hepatic function and liver blood flow, for the detection of sentinel lymph node and/or for the evaluation and prediction of skin-flaps viability.

For diagnosis applications, the amount of indocyanine green composition administered to a patient should be sufficient to permit the dye to fluoresce when irradiated at the appropriate wavelength, knowing that the peak absorption and emission of indocyanine green lies in the range of 800-850 nm. The same standard is applicable to the therapeutic methods using ICG solution; sufficient dye should be administered to enable the treatment to be efficient. The amounts of indocyanine green for administration may be readily determined by those skilled in the art, and should be at least the concentration currently accepted for use in ophthalmic angiography, e.g., for diagnosis, 2 ml of a 20 mg/mL indocyanine green solution. As acknowledged by the skilled professional, higher dye concentrations may advantageously be used in any of these diagnostic and treatment methods.

The improved stability of indocyanine green according to the invention provides improved diagnosis/treatment of the patient with the same amount of injected compounds, in comparison with prior art indocyanine green formulations. This is made possible because the improved stability of indocyanine green will provide a more intense response to fluorescence irradiation.

### DESCRIPTION OF THE DRAWINGS

FIG. 1 represents a reaction scheme for obtaining indocyanine green in acid form of formula (VI).
FIG. 2 represents the X-ray diffraction pattern of the indocyanine green prepared by the method according to the invention (Example 1).
FIG. 3 represents the X-ray diffraction pattern of the indocyanine green prepared according to a comparative method which comprises a salification step using sodium iodide (Example 2).
FIG. 4 represents the X-ray diffraction pattern of the indocyanine green prepared according to a comparative method which comprises a salification step using sodium acetate (Example 3).
FIG. 5 represents the X-ray diffraction pattern of the indocyanine green prepared according to a comparative method of Example 4.

### EXAMPLES

### 1- Materials and methods:

### I-1. Reagents and chemicals:

1,2,2-trimethylbenzo[e]indole (CAS No 41732-24-7) is supplied by Matrix Fine Chemical (purity > 99.0% by HPLC). 1,4-butanesultone (CAS No 1633-83-6) is supplied by Matrix Fine Chemical (purity > 99.9% by HPLC). Glutaconaldehyde dianil hydrochloride (CAS No 1497-49-0) is supplied by Matrix Fine Chemical.

The other reagents and solvents (acetone, methanol, triethylamine, sodium chloride...) were purchased from commercial suppliers such as Sigma Aldrich and TCI.

### I-2. Chromatographic conditions:

For purity and stability studies, the content of indocyanine green in the foregoing examples was determined by high pressure liquid chromatography (HPLC). The indocyanine green purity is expressed in % area as measured by HPLC at 240 nm. The analytical conditions are given in the following Table I:

**Table I: HPLC analysis conditions**

| Column | AGILENT Poroshell 120 EC-C8 (150x4.6-2.7 µm) |
|---|---|
| Column temperature | 40 °C |
| Flow rate | 1 mL/min |
| Detector | UV-Vis at 240 nm and MS ESI spectrometer |
| Injection volume | 5 µL |
| Diluent | Methanol |

The elution is carried out by gradient. The mobile phase consists of ammonium formiate buffer 100 mM pH 4.5 (eluent A) and acetonitrile (eluent B). The composition of the mobile phase was modified continuously during the elution process according to the following Table II:

**Table II: gradient elution during HPLC characterization**

| Time (min) | Eluent A% | Eluent B% |
|---|---|---|
| 0 | 82.5 | 17.5 |
| 5 | 82.5 | 17.5 |
| 40 | 30 | 70 |
| 45 | 30 | 70 |
| 45.1 | 10 | 90 |
| 50 | 10 | 90 |
| 50.1 | 82.5 | 17.5 |
| 60 | 82.5 | 17.5 |

The impurities that are likely to be detected by this HPLC method in the context of the present invention are summarized below.

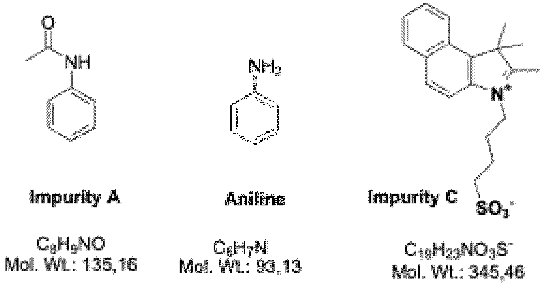

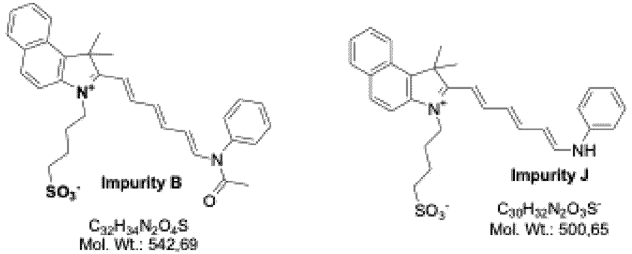

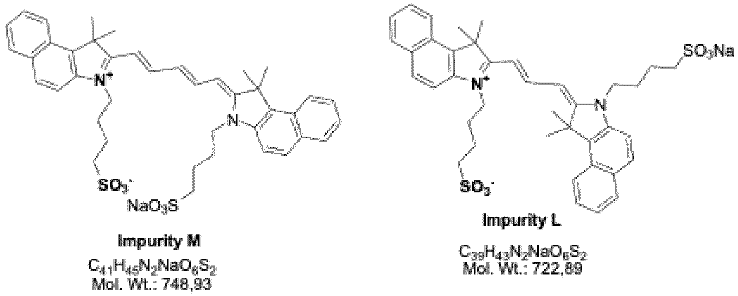

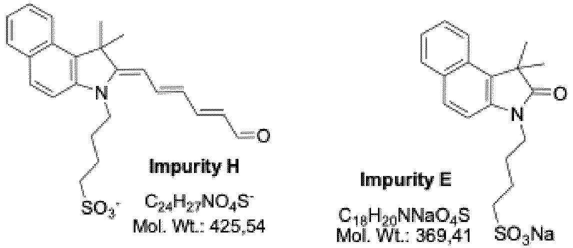

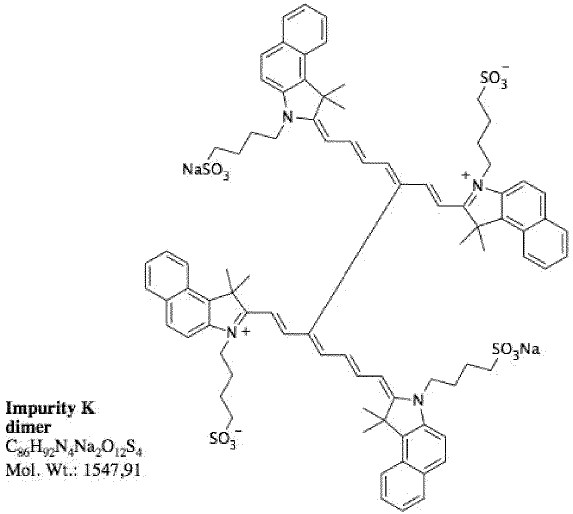

### 1-3, X-ray powder diffraction:

X-Ray powder diffraction data was obtained by using method known in the art using a Panalytical Empyrean S3 (DY2626) powder X-Ray diffractometer equipped with a PIXcel 1D-Medipix3 detector. The samples are mounted between two sheets of Kapton^{©} and polypropylene. Kapton^{©} can generate an artefact at 2θ = 5.5°. The scanning parameters included: radiation source: copper (1.54 A), X-ray tube power: 40 kV/40 mA, range: 2.0-50.0 degrees 2θ; scan mode: continuous scan; step size: 0.026 degrees; number of scans: 5, acquisition time 20.40 seconds. The results are expressed in terms of scattering angle 2 theta (°), d-spacing (Å), intensity of the peak and relative intensity expressed as a percentage of the most intense peak. All peak positions are within 0.2 degrees 2θ.

### I-4. NMR spectroscopy:

NMR spectra were recorded on Bruker Advanced NanoBay 300 MHZ with manual shim. Chemical shift (δ) of 1H are reported in ppm relative to TMS. Proton NMR information is given in the following format: multiplicity (s, singlet ; d, doublet; t, triplet; q, quartet; m, multiplet), coupling constant J, integration.

### 1-5, Sodium content by atomic absorption:

The sodium content in the foregoing examples was determined with an atomic absorption spectrometer Agilent AA 240FS coupled with SpectrAA software. The flame composition was air/acetylene and samples were dissolved in acidic water.

### II- Example 1 (according to the invention) :

### II-1. Synthesis of 4-(1,1,2-trimethyl-1H-benzo[e]indolium-3-yl)butane-1-sulfonate (step a):

A mixture of 1,1,2-trimethylbenzo[e]indole (20.0 g, 95.6 mmol, 1 eq) and 1,4-butanesultone (19.52 g, 142.4 mmol, 1.5 eq) in toluene (40 mL) was stirred vigorously at 140°C for 12 h. After cooling to room temperature, diethyl ether (400 mL) was added. The solid was collected by filtration and dried. A blue/gray powder in 97% yield was obtained.

¹H NMR (DMSO d₆, 300 MHz) : δ (ppm) : 8.35 (d, J = 8.5 Hz, 1H), 8.27 (d, J = 8.5 Hz, 1H), 8.21 - 8.19 (m, 2H), 7.77 (dd, J = 8.5, 8.5 Hz 1H), 7.71 (dd, J = 8.5, 8.5 Hz 1H), 4.59 (t, J = 7.8 Hz, 2H), 2.93 (s, 3H), 2.51 (t, J = 7.8 Hz, 2H), 2.01 (tt, J = 7.8, 7.8 Hz, 2H), 1.77 (m, 1H), 1.74 (s, 6H).

¹³C NMR (MeOD, 300 MHz) : δ (ppm) : 21.05, 21.95, 26.35, 48.5, 49.75, 55.80, 112.6, 123.0, 127.30, 127.75, 129.62, 131.15, 133.60, 137.31, 138.5, 196.40.

HPLC retention time= 7.6 min (relative retention time with respect to ICG= 0.26).

### II-2. Synthesis of 4-(1,1-dimethyl-2-(1E, 3E, 5E)-6-(N-phenyl acetamido)-hexa-1,3,5-trienyl)-1H-benzo[e]indolium-3-yl)-butane-sulfonate (step b):

In a 50-ml four necked flask were mixed the 4-(1,1,2-trimethyl-1H-benzo[e]indolium-3-yl)butane-1-sulfonate (2.08 g, 6.0 mmol) and glutaconaldehydedianil hydrochloride (1.88 g, 6.6 mmol), followed by stirring at 120°C for 1 hour in 20 mL of acetic anhydride. The mixture was allowed to cool to room temperature and stirred for 1 hour, followed by separating crystals by filtration. The resultant crystals were suspended and washed in acetone, separated by filtration, and air-dried. A light purple powder in 56% yield was isolated.

¹H NMR (DMSO d₆, 300 MHz) : δ (ppm) : 1.97 (two m, 4H), 2.00 (s, 6H), 2.12 (s, 3H), 2.89 (t, J = 6.9 Hz, 2H), 4.56 (Br t, J = 7.4 Hz, 2H), 5.40 (dd, J = 13.7, 11.3 Hz, 1H), 6.60 (dd, J = 14.4, 11.2 Hz, 1H), 6.97 (d, J = 15.2 Hz, 1H), 7.25 (m, 2H), 7.20-8.40 (m, 12H).

HPLC retention time= 21.8 min (relative retention time with respect to ICG= 0.76).

### II-3. Synthesis of Indocyanine green (steps c and d)

Step c): A 2L double jacket borosilicate reactor equipped with a mechanical stirrer was charged with 28.646 g (82.92 mmol, 0.9 equiv.) of 4-(1,1,2-trimethyl-1H-benzo[e]indolium-3-yl)butane-1-sulfonate and 50.000 g (92.13 mmol, 1.0 equiv.) of 4-(1,1-dimethyl-2-((1E, 3E, 5E)-6-(N-phenyl acetamido)-hexa-1,3,5-trienyl)-1H-benzo[e]indolium-3-yl)-butane-sulfonate and diluted with distilled water (75.0 mL) and MeOH (125.0 mL). The mixture was stirred at 150 rpm for 5 minutes at room temperature. 12.8 mL of triethylamine (92.13 mmol, 1.00 equiv.) was added in one portion and the mixture turned green. The mixture was stirred at 25 °C for 3 hours, and warmed to 50 °C.

Step d): A solution of 8.615 g of sodium chloride (147.41 mmol, 1.70 equiv.) in 50.0 mL of distilled water was added in one portion. When the aspect of the mixture thickens, 1.5 L of acetone were slowly added while maintaining the reaction mixture above 40 °C. The mixture was stirred at 200 rpm for a 1 h additional period. The reaction was cooled down to 25 °C and stirred overnight at 200 rpm and then filtered and washed three times with 250 mL of acetone. The solid was dried at 40 °C under vacuum to give 64.3 g of crude indocyanine green as a green powder.

Crude product purity was controlled by HPLC (HPLC profile : ICG 97.25% ; Imp. A 2.41%, Imp. E 0.10% ; Imp. K 0.11% ; Imp. M 0.13%).

Sodium content = 3.90%.

### II-4. Purification of Indocyanine green (step e):

A 2L double jacket borosilicate reactor equipped with a mechanical stirrer was charged with crude indocyanine green (50.0 g) and 350.0 mL of distilled water. The mixture was warmed to 50 °C and a thickening was observed at 35-37 °C, 1.5 L of acetone were added portionwise while maintaining the mass temperature above 40 °C (green homogenous liquid mixture). After a 1 hour stirring period at 50 °C, the stirring system was shut down and the mixture was cooled down to room temperature without any agitation. Red-golden crystals appeared at the surface of the liquid. After 60 hours at room temperature, the mixture was cooled down to 5 °C without any stirring for 16 hours, filtered and washed three times with 5 volumes of acetone and then with 5 volumes of acetonitrile. The filtration cake was dried under vacuum (50 mbar) at 70 °C for 72 hours. Indocyanine green was obtained as red-golden glittery solid in 64% global isolated yield (34.3 g, 68% isolated purification yield).

Purity = 99.95% (HPLC profile : ICG 99.95% ; Every impurity < 0.05% ).

Sodium content = 2.82% (corrected with water content by thermobalance analysis).

¹H NMR (300 MHz, methanol-d₄) δ (ppm): 8.22 (d, J = 7.23 Hz, 2H), 8.03 (m, 2H), 7.98 (m, 4H), 7.61 (m, 5H), 7.46 (t, J = 6.85 Hz, 2H), 6.60 (t, J = 11.03 Hz, 2H), 6.35 (d, J = 11.7 Hz, 2H), 4.24 (t, J = 5.3 Hz, 4H), 2.96 (t, J = 7.23 Hz, 4H), 2.03 (m, 8H), 1.92 (m, 12H).

The obtained PXRD pattern is described in Figure 2 and shows a crystalline form of indocyanine green characterized by the following peak values:

**Table III: peak values of the PXRD pattern of crystalline indocyanine green according to the invention**

| Scattering angle 2 theta (°) | d-spacing (Å) | Intensity (counts) | Relative intensity (%) |
|---|---|---|---|
| 3.83 | 23.08 | 7545 | 79.4 |
| 4.22 | 20.93 | 7361 | 77.5 |
| 5.01 | 17.64 | 2118 | 24.7 |
| 5.30 | 16.67 | 3623 | 42.3 |
| 6.37 | 13.86 | 2249 | 26.2 |
| 7.69 | 11.49 | 1722 | 20.1 |
| 12.81 | 6.91 | 6588 | 69.4 |
| 13.33 | 6.64 | 912 | 9.6 |
| 13.80 | 6.41 | 1355 | 14.3 |
| 14.38 | 6.15 | 8168 | 86.0 |
| 14.70 | 6.02 | 1245 | 13.1 |
| 16.14 | 5.49 | 923 | 9.7 |
| 17.72 | 5.00 | 3816 | 40.2 |
| 18.08 | 4.90 | 2257 | 23.8 |
| 18.22 | 4.87 | 2374 | 25.0 |
| 19.24 | 4.61 | 2690 | 28.3 |
| 20.24 | 4.38 | 4302 | 45.3 |
| 20.66 | 4.30 | 9499 | 100.0 |
| 23.26 | 3.82 | 3835 | 40.4 |

The intensity and relative intensity values of the above peaks may vary by +/-15%.

Stability in the solid state: 5.0 g of crystalline Indocyanine Green powder were stored in a 20 mL amber type II glass and stored away from light. The results are summarized in Table IV.

**Table IV: Storage stability in the solid state of inventive ICG obtained by the method of Example 1**

| Storage time | t0 | t= 3 months | t= 6 months |
|---|---|---|---|
| ICG purity (HPLC) | 99.95 % | 99.95 % | 99.95 % |
| Total impurities (HPLC) | < 0.05 % | < 0.05 % | < 0.05 % |

### III- Example 2 (comparative) :

The protocol for preparing indocyanine green disclosed in the examples of prior art US2019/0337896A1 was reproduced.

### III-1. Synthesis of indocyanine green:

A 2 L double jacket borosilicate reactor equipped with a mechanical stirrer was charged with 20.0 g of 4-(1,1-dimethyl-2-((1E, 3E, 5E)-6-(N-phenyl acetamido)-hexa-1,3,5-trienyl)-1H-benzo[e]indolium-3-yl)-butane-sulfonate (0.037 mol, 1.0 equiv.) and diluted in 20.0 mL of methanol. 4-(1,1,2-trimethyl-1H-benzo[e]indolium-3-yl)butane-1-sulfonate (12.73 g, 0.037 mol, 1.0 equiv.) and triethylamine amine (1.0 mL, 0.007 mol, 0.20 equiv.) were successively added to the reaction mixture (fluidification observed). After a 1.5 h stirring period at 60-65 °C, no green coloration was observed showing that the reaction did not start. 4.0 mL (0.028 mol, 0.8 equiv.) of triethylamine were added to the mixture: the green coloration was instantaneous.

The mixture was cooled down to 10-15 °C and a solution of 5.52 g (0.037 mol, 1.0 equiv.) of sodium iodide in 100.0 mL of methanol was added. The reactor was heated at 60-65 °C for 1.5 h and then cooled down to room temperature. Methanol was distilled under reduced pressure to give a green sticky residue. 400 mL of acetone was poured into the reactor and the heterogeneous mixture was heated at 50-60 °C for 1 h, filtered at 50 °C and washed with 40 mL of acetone to give 23.5 g of crude indocyanine green as a green powder.

### III-2, Purification of indocyanine green:

23.5 g of crude indocyanine green were diluted with 94 mL (4 vol.) of methanol and 141 mL of isopropyl alcohol (6 vol.). The mixture was heated at 60-70 °C for 1 hour and filtered at 50 °C. The cake was washed with 45 mL of isopropyl alcohol to give 21.2 g of pure indocyanine green as a green powder in 90% isolated purification yield.

Purity= 99.21% (HPLC profile ICG 99.21% ; Imp. A < 0.30%; Imp. C < 0.07%; Imp. M < 0.07%, Imp. L < 0.06%; total unknown impurities= 0.29%).

Sodium content = 3.27%.

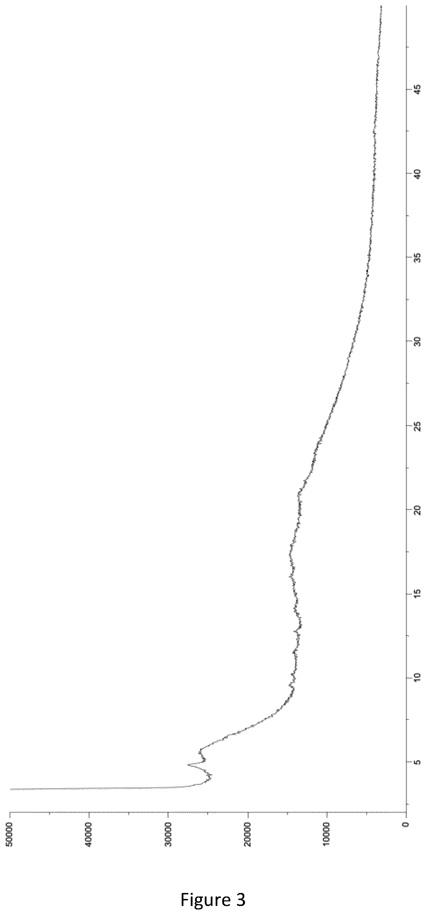

The obtained PXRD pattern is described in Figure 3 and shows a mostly amorphous product with two ill-defined peaks at 3.30 and 4.86 degrees 2 theta.

Stability in the solid state: 5.0 g of Indocyanine Green powder were stored in a 20 mL amber type II glass and stored away from light. The results are summarized in table V.

**Table V: Storage stability in the solid state of comparative ICG obtained by the method of Example 2**

| Storage time | t0 | t= 1 month | t= 2 months | t= 6 months |
|---|---|---|---|---|
| ICG purity (HPLC) | 99.21 % | 99.25 % | 99.09 % | 99.03% |
| Total impurities (HPLC) | 0.79 % | 0.75 % | 0.91 % | 0.97% |

### IV- Example 3 (comparative):

The protocol for preparing indocyanine green disclosed in the examples of prior art WO2017093889A1 was reproduced.

### IV-1. Synthesis of indocyanine green:

A 2 L double jacket borosilicate reactor equipped with a mechanical stirrer was charged with 4-(1,1,2-trimethyl-1H-benzo[e]indolium-3-yl)butane-1-sulfonate (56.17 g, 0.163 mol, 1.89 equiv.) and diluted in 140.0 mL of methanol. 35.10 g of sodium acetate (0.428 mol, 4.97 equiv.) were added and the reaction was stirred at room temperature for 5 minutes. The mixture was heated at 65 °C and a solution of 25.0 g (0.086 mol, 1.0 equiv.) of N-phenyl-N-((1E,3E,5E)-5-(phenylimino)penta-1,3-dienyl)acetamide in 25.0 mL of methanol was added. A green coloration occurred. The reaction mixture was stirred at 65 °C for 2 h, cooled down to room temperature, diluted with 1.0 L of ethyl acetate and stirred overnight at room temperature. The mixture was filtered and dried at 40 °C to give 92 g (yield = 100%) of crude indocyanine green as a green sticky solid.

### IV-2. Purification of indocyanine green:

60.0 g of crude indocyanine green were diluted in 420 mL of distilled water and treated by 1.2 g (2% w/w) of sodium iodide. The mixture was heated at 55-60 °C and 1.8 L of acetone were added while maintaining the reaction mixture above 45 °. The reaction was heated at 65 °C for 1 hour, cooled down to room temperature and stirred over a week end at room temperature. The observed green solid was filtered and washed with acetone to give 30.9 g of indocyanine green as a green/red powder in 52% isolated yield.

Purity = 98.60% (HPLC profile: ICG 98.60% ; Imp. E < 0.16%; Imp L < 0.11%, Imp M < 0.17%).

Sodium content = 7.04%.

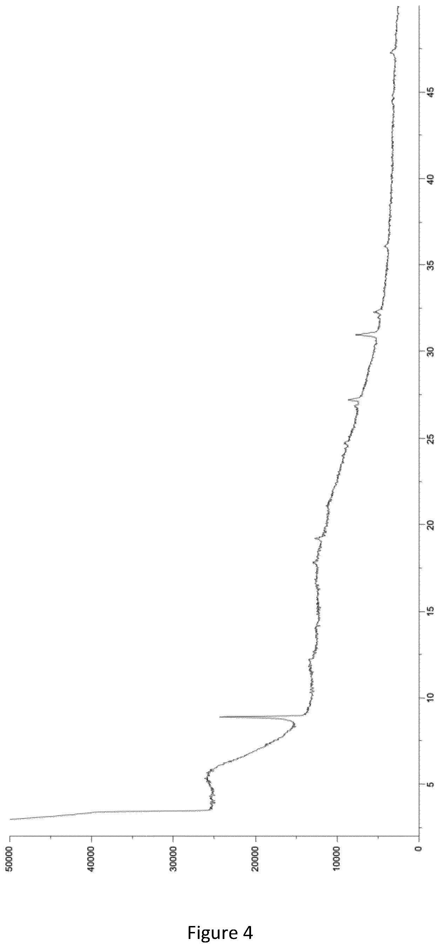

The obtained PXRD pattern is described in Figure 4 and shows a mostly amorphous product. The pattern shows also some very weak and ill-defined peaks which can be attributed to a minority crystalline form. However, the peaks are different from those observed with the product obtained according to Example 1. The observed peaks are summarized in the Table VI.

**Table VI: peak values of the PXRD pattern of comparative indocyanine green obtained by the method of Example 3**

| Scattering angle 2 theta (°) | Intensity (counts) | Relative intensity (%) |
|---|---|---|
| 8.55 | 1076 | 100 |
| 27.01 | 153 | 14.2 |
| 31.50 | 307 | 28.5 |

Stability in the solid state: 5.0 g of Indocyanine Green powder were stored in a 20 mL amber type II glass and stored away from light.

**Table VII: Storage stability in the solid state of comparative ICG obtained by the method of Example 3**

| Storage time | t0 | t= 1 month | t= 5 month |
|---|---|---|---|
| ICG purity (HPLC) | 98.60 % | 98.39 % | 97.95% |
| Total impurities (HPLC) | 1.40 % | 1.61 % | 2.05 % |

### V- Example 4 (comparative):

The protocol for preparing indocyanine green disclosed in the examples of prior art WO9507888A1 was reproduced.

### V-1. Synthesis of indocyanine green:

A 0.5 L double jacket borosilicate reactor equipped with a mechanical stirrer was charged with 4-(1,1-dimethyl-2-((1E, 3E, 5E)-6-(N-phenyl acetamido)-hexa-1,3,5-trienyl)-1H-benzo[e]indolium-3-yl)-butane-sulfonate (10.0 g, 0.184 mol, 1.00 equiv.) and EtOH (58 mL). The mixture was stirred for 5 minutes, 4-(1,1,2-trimethyl-1H-benzo[e]indolium-3-yl)butane-1-sulfonate (6.36 g, 0.184 mol, 1.00 equiv.) and triethylamine (2.6 mL, 0.184 mol, 1.00 equiv.) were added. The reaction mixture turned green and was heat at 78 °C for 15 minutes and cooled down to 20 °C under agitation. A solution of 1.52 g of AcONa (0.184 mol, 1.0 equiv.) in 105 mL of EtOH were added and the mixture was stirred at 20 °C for 30 min. The mixture was filtered and washed two times with acetone (50 mL) and dried at reduced pressure (50 mbar) at 40 °C to give 11 g of a red-green solid. Crude product purity was controlled by HPLC analysis (typical HPLC profile ICG 92.62%; Imp A 4.82%; Imp C 1.07%).

### V-2. Purification of indocyanine green:

The red-green crude ICG (11 g) was diluted in 110 mL of acetone, heat at reflux for 30 min, cooled down at room temperature, filtered and washed with 20 mL of acetone. This process is repeated 2 times to give 10.3 g of purified ICG as a red-green solid (72% isolated yield).

Purity = 95.98% (HPLC profile: ICG 95.98%; Imp. A 1.36%, Imp. C 1.08%, Imp. E 0.37%, Imp B 0.07%, Imp H 0.25%, Imp K 0.06%, Imp J 0.05%, Imp M < 0.17%).

Sodium content = 2.43%.

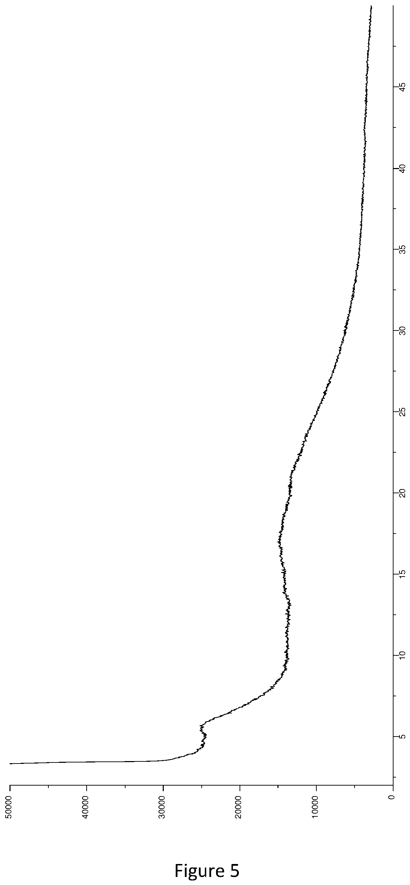

The obtained PXRD pattern is shown in Figure 5 and shows an amorphous product.

Stability in the solid state: 5.0 g of Indocyanine Green powder were stored in a 20 mL amber type II glass and stored away from light. The results are presented in Table VIII.

**Table VIII: Storage stability in the solid state of comparative ICG obtained by the method of Example 4**

| Storage time | t0 | t= 4 months |
|---|---|---|
| ICG purity (HPLC) | 95.98 % | 94.11 % |
| Total impurities (HPLC) | 4.02 % | 5.89% |

### VI- Example 5: Comparison of salification reagents

The procedure of example 1 was reproduced by replacing NaCl by several other salification reagents. The tested salification reagents are sodium bromide (NaBr), sodium acetate (NaOAc), sodium ascorbate (NaOAsc), sodium ethanolate (NaOEt).

### VI-1. Synthesis of indocyanine green:

A three necked 500 mL round bottom flask was charged with 4-(1,1-dimethyl-2-((1E, 3E, 5E)-6-(N-phenyl acetamido)-hexa-1,3,5-trienyl)-1H-benzo[e]indolium-3-yl)-butane-sulfonate (5.73 g, 16.59 mmol, 0.90 equiv.) and 4-(1,1,2-trimethyl-1H-benzo[e]indolium-3-yl)butane-1-sulfonate (10.0 g, 18.43 mmol, 1.00 equiv.). H₂O (15.0 mL, 1.5 vol.) and MeOH (25.0 mL, 2.5 vol.) were added to the reaction medium. Et₃N (2.6 mL, 18.43 mmol, 1.00 equiv.) was added to the mixture and the reaction was stirred at 25 °C for 2 hours and then heated to 50 °C. A solution of the appropriate sodium salt (31.33 mmol, 1.70 equiv. in 10 mL of H₂O was added while maintaining the reaction mixture above 45 °C. The mixture was maintained at 50 °C until a thickening of the reaction medium was observed. Acetone (300 mL, 30 vol.) was added portionwise while maintaining the temperature above 40 °C and the mixture was maintained at 50 °C for 1h30 and then cooled down to 25 °C. The solid was filtered on sintered glass (POR 3), washed with 3x50 mL (5 vol.) of acetone and dry under vacuum at 40 °C for 16 h to give crude indocyanine green as a green powder.

### VI-2. Purification of indocyanine green:

In a three necked 500 mL round bottom flask, crude indocyanine green was charged (12 g) in 84 mL (7 vol.) of H₂O and the mixture was warmed to 50 °C. 360 mL of acetone (30 vol.) was added portionwise while maintaining the temperature above 40 °C. The mixture was stirred at 50 °C for 30 min. Stirring was switched off and the mixture was cooled down to room temperature overnight. The mixture was then cooled down to 0 - 5 °C (ice bath) for 2 hours. The mixture was filtered on sintered glass (POR 3), washed with 3x60 mL of acetone (5 vol.) and dried under vacuum at 50 °C. The results are presented in Table IX.

**Table IX: Storage stability in the solid state of ICG obtained by varied salification reagents**

| NaBr | Storage time | t0 | t= 4 weeks |
|---|---|---|---|
| | ICG purity (HPLC) | 99.95% | 99.84% |
| | Total impurities (HPLC) | 0.05% | 0.16% |
| NaOAc | Storage time | t0 | t= 8 weeks |
| | ICG purity (HPLC) | 99.95% | 99.65% |
| | Total impurities (HPLC) | 0.05% | 0.35% |
| NaOAsc | Storage time | t0 | t= 8 weeks |
| | ICG purity (HPLC) | 99.95% | 99.72% |
| | Total impurities (HPLC) | 0.05% | 0.28% |
| NaOEt | Storage time | t0 | t= 8 weeks |
| | ICG purity (HPLC) | 99.58% | 99.34% |
| | Total impurities (HPLC) | 0.42% | 0.66% |

These results show that replacing NaCl in step d) of the method according to the invention with other organic or inorganic salts such as those commonly used in the art results in an ICG that is not storage stable.

### VII- Example 6: Solubility test

Solubility tests were carried out with ICG obtained by the method of the invention (Example 1) and ICG obtained by a similar method by varying the salification agent (Example 5). A 100 mL round bottom flask was charged with the obtained ICG (250 mg), sodium ascorbate (100 mg) and water for injection. The mixture was stirred under N₂ atmosphere at room temperature for 5h20. The solution was filtered on a 0.22 µm PA filter. The results are presented in Table X.

**Table X: solubility of ICG obtained by varied salification reagents**

| **Salification reagent** | **Solubility** |
|---|---|
| NaCl (Example 1) | completely dissolved, no trace of residual solid on the membrane |
| Sodium methoxide | partially dissolved, traces of residual undissolved solid on the membrane |
| Sodium Acetate | partially dissolved, traces of residual undissolved solid on the membrane |
| Sodium ethanoate | partially dissolved, traces of residual undissolved solid on the membrane |

These results show that replacing NaCl in step d) of the method according to the invention with other organic salts such as those commonly used in the art results in an ICG that is not completely soluble in aqueous solution.

## Claims

1. A method for preparing indocyanine green **characterized in that** it comprises at least a step d) of converting 4-[2-[7-[1,1-dimethyl-3-(4-sulfobutyl)benzo[e]indol-3-ium-2-yl] hepta-2,4,6-trienylidene]-1,1-dimethylbenzo[e]indol-3-yl]butane-1-sulfonic acid of formula (VI) to 3,3,3',3'-tetramethyl-1,1'-di(4-sulfobutyl)-4,5,4',5'-dibenzoindotricarbocyanine sodium salt of formula (VII) by treatment with sodium chloride:

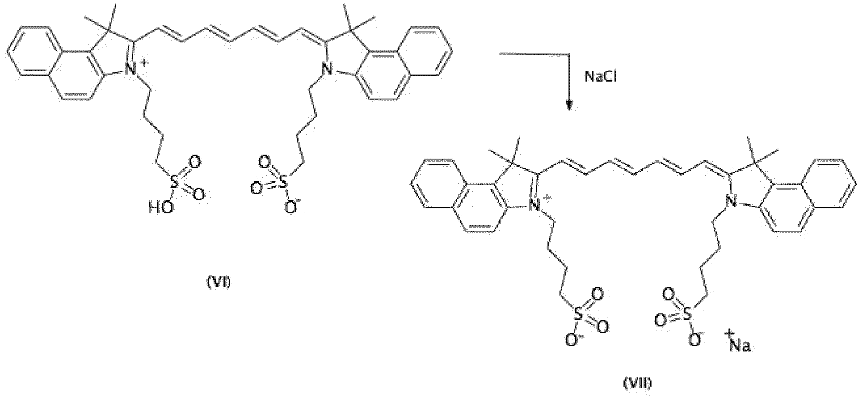

2. The method according to claim 1, wherein the molar ratio Indocyanine green in acid form of formula (VI) to sodium chloride is inferior or equal to 1:1.

3. The method according to claim 1 or 2, wherein step d) is carried out in a solvent selected from the group consisting of water, methanol, ethanol, isopropylalcohol, n-propanol, n-butanol and mixtures thereof, preferably in a mixture of water and methanol.

4. The method according to any one of claims 1 to 3, wherein step d) is carried out at a temperature ranging from 25 to 65 °C.

5. The method according to any one of claims 1 to 4, wherein after completion of step d), the reaction mixture is cooled down to room temperature and the product of formula (VII) is isolated from the reaction medium by precipitation.

6. The method according to any one of claims 1 to 5, wherein the Indocyanine green in acid form of formula (VI) is prepared by:
a) reacting 1,2,2-trimethylbenzo[e]indole of formula (I) with 1,4-butanesultone of formula (II) to obtain an intermediate 4-(1,1,2-trimethyl-1Hbenzo[e]indolium-3-yl)butane-1-sulfonate of formula (III): 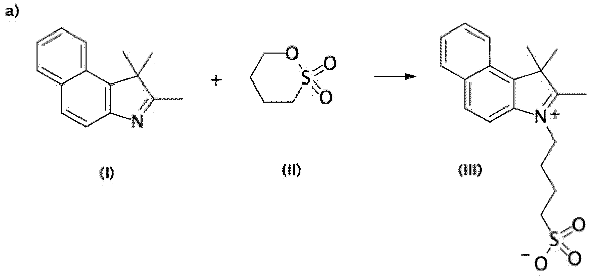
b) condensing the intermediate of formula (III) with glutaconaldehyde dianil hydrochloride of formula (IV) in the presence of acetic anhydride to obtain an intermediate 4-(1,1-dimethyl-2-((1E, 3E, 5E)-6-(N-phenyl acetamido)-hexa-1,3,5-trienyl)-1H-benzo[e]indolium-3-yl)-butane-sulfonate of formula (V): 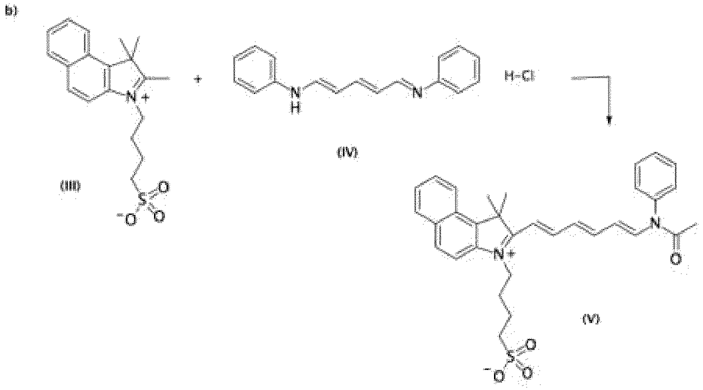
c) reacting the intermediate of formula (V) with 4-(1,1,2-trimethyl-1H-benzo[e]indolium-3-yl)butane-1-sulfonate of formula (III) in the presence of a base to obtain 4-[2-[7-[1,1-dimethyl-3-(4- sulfobutyl)benzo[e]indol-3-ium-2-yl]hepta-2,4,6-trienylidene]-1,1dimethylbenzo[e]indol-3-yl]butane-1-sulfonic acid of formula (VI):

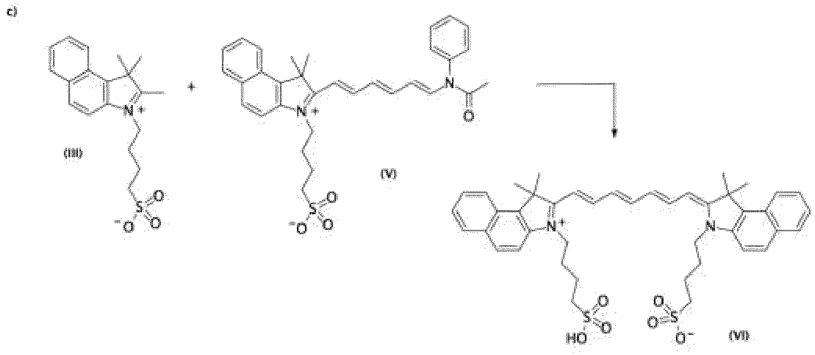

7. The method according to claim 6, wherein the base in step c) is selected from the group consisting of triethylamine, pyridine, ammonia, sodium carbonate, sodium bicarbonate and sodium hydroxide.

8. The method according to claim 6 or 7, wherein the intermediates of formulae (III), (V) and (VI) are purified after steps a), b) and c) respectively.

9. The method according to any one of the preceding claims, further comprising a step e) of purification of the indocyanine green after step d).

10. The method according to claim 9, wherein the purification step e) comprises at least:
e₁) suspending or dispersing or dissolving the indocyanine green of formula (VII) in a solvent,
e₂) heating the composition obtained at e₁),
e₃) cooling down the solution obtained at e₂),
e₄) recovering indocyanine green in a crystalline form.

11. The method according to claim 10, wherein the solvent is step e₁) is selected from the group consisting of water, acetone, methanol, ethanol, isopropyl alcohol, n-propanol, n-butanol and mixtures thereof, preferably a mixture of water and acetone.

12. The method according to claim 10 or 11, wherein the composition in step e₂) is heated to a temperature ranging from 40 to 80°C.

13. The method according to any one of claim 10 to 12, wherein the solution in step e₃) is cooled down to a temperature ranging from 10 to 25°C.

14. The method according to any one of claim 10 to 13, wherein the cooling in step e₃) is carried out without stirring or agitating.

15. The method according to any one of claim 10 to 14, wherein in step e₄), crystalline indocyanine green is recovered from the reaction medium by filtration.
